# EUROPEAN PATENT APPLICATION

(11) **EP 4 783 426 A1**
(43) Date of publication of application: **29.07.2026**
(21) Application number: 24907169.7
(22) Date of filing: 05.12.2024
(51) Int. Cl.: H02K 5/173, H02K 5/24

(54) **VEHICLE DRIVE DEVICE**

(30) Priority: 19.12.2023 JP 2023213745
(71) Applicant: AISIN CORPORATION, Kariya-shi, Aichi 448-8650 (JP)
(72) Inventor: NAKASHIMA, Keisuke, Kariya-shi, Aichi 448-8650 (JP); KANEKO, Ryota, Kariya-shi, Aichi 448-8650 (JP); FUJITA, Yohei, Kariya-shi, Aichi 448-8650 (JP); NEMOTO, Tsuyoshi, Kariya-shi, Aichi 448-8650 (JP); GOMA, Rintaro, Kariya-shi, Aichi 448-8650 (JP)
(74) Representative: Kramer Barske Schmidtchen Patentanwälte PartG mbB
(86) International application number: PCT/JP2024/043023
(87) International publication number: WO 2025/134783

(57) **Abstract**

A vehicle drive device includes: a rotating electric machine that has a tubular rotor shaft connected to a rotor so as to rotate integrally therewith; a drive transmission mechanism provided on a power transmission path connecting the rotor shaft and a wheel, and having an input shaft coupled to the rotor shaft; and a housing accommodating the rotating electric machine and the drive transmission mechanism. The rotor shaft is supported by the housing with a first ball bearing having a first inner ring and a first outer ring interposed between the rotor shaft and the housing. The input shaft is supported by the housing with a second ball bearing having a second inner ring and a second outer ring interposed between the input shaft and the housing. An elastic member is disposed between the first ball bearing and the second ball bearing adjacent to each other in an axial direction of the rotor shaft and the input shaft, the elastic member biasing the first ball bearing and the second ball bearing in a direction of separating the first ball bearing and the second ball bearing from each other.

## Description

### TECHNICAL FIELD

The present invention relates to a vehicle drive device including a rotating electric machine serving as a drive source of a wheel, and a drive transmission mechanism provided on a power transmission path connecting the rotating electric machine and the wheel.

### BACKGROUND ART

An example of such a vehicle drive device is disclosed in Patent Literature 1 below. Hereinafter, in the description of the background art, reference signs in Patent Literature 1 are cited in parentheses.

A vehicle drive device (1) of Patent Literature 1 includes a rotor shaft (60) of a rotating electric machine (M) and an input shaft (10) spline-coupled to the rotor shaft (60), and a wave spring (82) that presses the rotor shaft (60) and the input shaft (10) in a direction away from each other in an axial direction is disposed.

### CITATIONS LIST

### PATENT LITERATURE

Patent Literature 1: JP 2005-28907 A

### SUMMARY OF INVENTION

### TECHNICAL PROBLEMS

In the vehicle drive device (1) of Patent Literature 1, the wave spring (82) presses the rotor shaft (60) against a housing (5), and vibration of the rotating electric machine (M) is propagated to reduce radiation sound generated in the housing (5).

On the other hand, since the rotational noise of the rotating electric machine (M) is generated by a plurality of factors such as the accuracy of spline coupling and the amount of rattling in the radial direction during rotation, it is difficult to reduce the rotational noise only by pressing the rotor shaft (60) against the housing (5).

Therefore, it is desired to realize a vehicle drive device that can satisfactorily suppress rotational noise of a rotating electric machine.

### SOLUTIONS TO PROBLEMS

A characteristic configuration of a vehicle drive device in view of the above includes: a rotating electric machine that has a stator, a rotor that is rotatably supported with respect to the stator, and a tubular rotor shaft that is connected to the rotor so as to rotate integrally with the rotor, the rotating electric machine serving as a drive source of a wheel; a drive transmission mechanism that is provided on a power transmission path connecting the tubular rotor shaft and the wheel, and has an input shaft that is coupled to the tubular rotor shaft; and a housing that accommodates the rotating electric machine and the drive transmission mechanism, in which the tubular rotor shaft is supported by the housing with a first ball bearing that has a first inner ring and a first outer ring interposed between the tubular rotor shaft and the housing, the input shaft is supported by the housing with a second ball bearing that has a second inner ring and a second outer ring interposed between the input shaft and the housing, and an elastic member is disposed between the first ball bearing and the second ball bearing that are adjacent to each other in an axial direction of the tubular rotor shaft and the input shaft, the elastic member biasing the first ball bearing and the second ball bearing in a direction of separating the first ball bearing and the second ball bearing from each other.

According to this characteristic configuration, between the first ball bearing of the rotor shaft and the second ball bearing of the input shaft, the elastic member that biases the first ball bearing and the second ball bearing in the direction of separating the first ball bearing and the second ball bearing from each other is disposed. For example, in a case where the inner ring of the first ball bearing is provided to be relatively movable with respect to the rotor shaft, the first inner ring and the first outer ring abut on balls by the biasing force of the elastic member. As a result, smooth rotation of the rotating electric machine is realized while reducing the amount of rattling in the radial direction at the normal time, and when excessive force acts, the first inner ring and the first outer ring are separated from the balls by the force against the biasing force of the elastic member, and seizure of the first ball bearing can be prevented. In addition, since the first ball bearing moves toward the rotor shaft by the biasing force of the elastic member, rattling of the first ball bearing on the rotor shaft can also be suppressed. In addition, since the elastic member is provided between the first ball bearing and the second ball bearing adjacent to each other in the axial direction of the rotor shaft and the input shaft, that is, for example, close to the spline coupling of both the shafts, a machining error of the spline coupling can be absorbed.

Therefore, the vehicle drive device can satisfactorily suppress rotational noise of the rotating electric machine.

### BRIEF DESCRIPTION OF DRAWINGS

FIG. 1 is a cross-sectional view along an axial direction of a vehicle drive device according to a first embodiment.
FIG. 2 is a skeleton diagram of the vehicle drive device according to the first embodiment.
FIG. 3 is a view illustrating a positional relationship of each element in a front view in the vehicle drive device according to the first embodiment.
FIG. 4 is a view illustrating a positional relationship of each element in an axial view in the vehicle drive device according to the first embodiment.
FIG. 5 is a cross-sectional view taken along line V-V in FIG. 3.
FIG. 6 is a cross-sectional view taken along line VI-VI in FIG. 3.
FIG. 7 is a cross-sectional view of a main part of a first case.
FIG. 8 is a front view of the vehicle drive device according to the first embodiment.
FIG. 9 is one side view of the vehicle drive device according to the first embodiment.
FIG. 10 is the other side view of the vehicle drive device according to the first embodiment.
FIG. 11 is a view illustrating an example of a vehicle in which the vehicle drive device is disposed.
FIG. 12 is a cross-sectional view of a main part of the vehicle drive device according to the first embodiment.
FIG. 13 is a cross-sectional view of a main part of a vehicle drive device according to a second embodiment.
FIG. 14 is a cross-sectional view of a main part of a vehicle drive device according to a third embodiment.
FIG. 15 is a cross-sectional view of a main part of a vehicle drive device according to a fourth embodiment.
FIG. 16 is a front view of a vehicle drive device according to another embodiment.

### DESCRIPTION OF EMBODIMENTS

Hereinafter, embodiments of a vehicle drive device according to the present invention will be described with reference to the drawings.

However, the present invention is not limited to the following embodiments, and various modifications can be made without departing from the gist of the present invention.

### [First Embodiment]

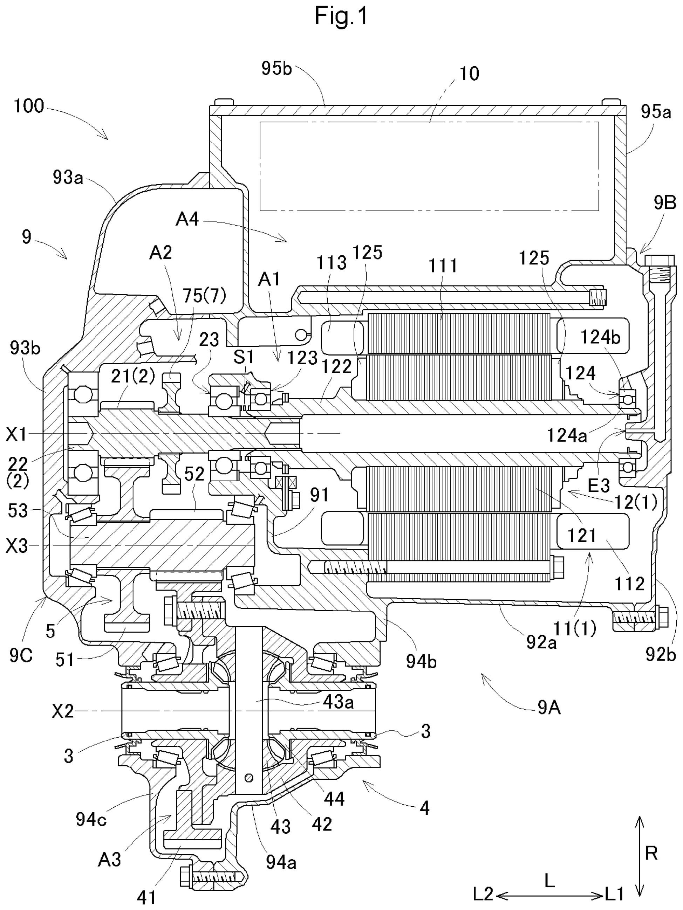

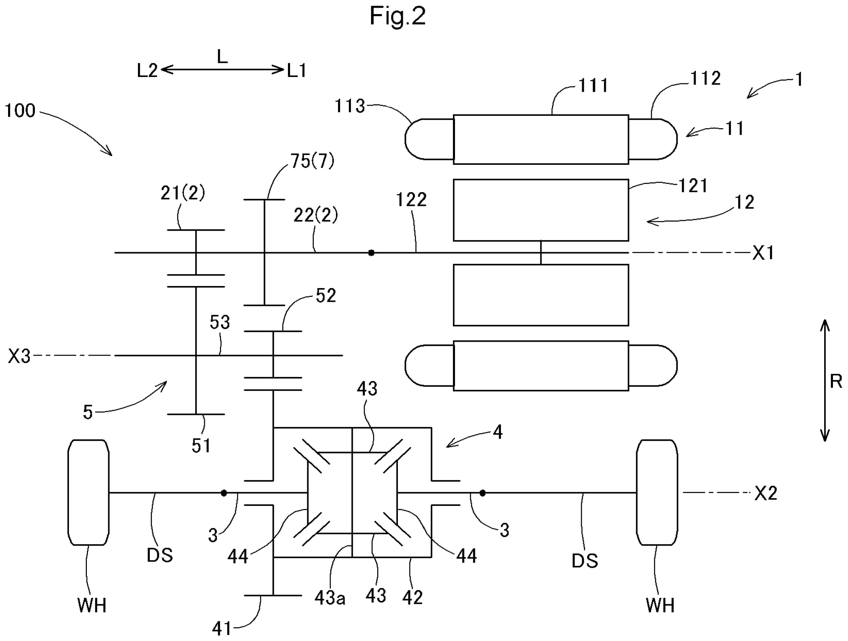

As illustrated in FIGS. 1 and 2, a vehicle drive device 100 includes a rotating electric machine 1 including a stator 11 and a rotor 12, an input member 2, a pair of output members 3, a differential gear mechanism 4, and an inverter device 10. In the present embodiment, the vehicle drive device 100 further includes a counter gear mechanism 5 and a case 9.

The rotating electric machine 1 is disposed on a first axis X1. The first axis X1 is a rotation axis of the rotor 12. In the present embodiment, the input member 2 is also disposed on the first axis X1. The differential gear mechanism 4 is disposed on a second axis X2 different from the first axis X1. In the present embodiment, the pair of output members 3 is also disposed on the second axis X2. In the present embodiment, the counter gear mechanism 5 is disposed on a third axis X3 different from the first axis X1 and the second axis X2. In the present example, the axes X1 to X3 are disposed in parallel to each other.

In the following description, a direction parallel to the axes X1 to X3 is referred to as an "axial direction L" of the vehicle drive device 100. Further, one side in the axial direction L is referred to as a "first side L1 in the axial direction", and the other side is referred to as a "second side L2 in the axial direction". In the present embodiment, in the axial direction L, the side on which the rotating electric machine 1 is disposed with respect to the input member 2 is defined as the first side L1 in the axial direction, and the opposite side is defined as the second side L2 in the axial direction. A direction orthogonal to the axis X1, X2, or X3 is defined as a "radial direction R" with respect to the axis. Note that, in a case where it is not necessary to distinguish which axis is to be used as a reference, or in a case where it is clear which axis is to be used as a reference, it may be simply referred to as the "radial direction R".

As illustrated in FIG. 1, the case 9 accommodates the rotating electric machine 1, the input member 2, the differential gear mechanism 4, and the inverter device 10. In the present embodiment, the case 9 also accommodates the pair of output members 3 and the counter gear mechanism 5. Note that the pair of output members 3 is accommodated in the case 9 in a state where a portion thereof is exposed to the outside of the case 9.

A first accommodation portion A1, a second accommodation portion A2, a third accommodation portion A3, and a fourth accommodation portion A4 are formed inside the case 9. In the present embodiment, the first accommodation portion A 1 is a space in which the rotating electric machine 1 is accommodated. The second accommodation portion A2 is a space in which the input member 2, the counter gear mechanism 5, and a parking mechanism 7 are accommodated. The third accommodation portion A3 is a space in which the pair of output members 3 and the differential gear mechanism 4 are accommodated. The fourth accommodation portion A4 is a space in which the inverter device 10 is accommodated.

In the present embodiment, the case 9 includes a partition wall portion 91, a first peripheral wall portion 92a, a first side wall portion 92b, a second peripheral wall portion 93a, a second side wall portion 93b, a third peripheral wall portion 94a, a third side wall portion 94b, a fourth side wall portion 94c, an accommodating wall portion 95a, and a lid portion 95b.

The partition wall portion 91 is formed so as to partition the first accommodation portion A1 and the second accommodation portion A2. In the present embodiment, the partition wall portion 91 is formed to extend along the radial direction R. That is, the partition wall portion 91 partitions the first accommodation portion A1 and the second accommodation portion A2 in the axial direction L.

The first peripheral wall portion 92a is formed so as to cover the outer side of the rotating electric machine 1 in the radial direction R. The first side wall portion 92b is formed so as to cover the first side L1 in the axial direction of the rotating electric machine 1. In the present embodiment, the first peripheral wall portion 92a is formed in a tubular shape in which the first side L1 in the axial direction is opened. The opening on the first side L1 in the axial direction of the first peripheral wall portion 92a is closed by the first side wall portion 92b. On the other hand, the partition wall portion 91 is integrally provided on a portion of the first peripheral wall portion 92a on the second side L2 in the axial direction with respect to the rotating electric machine 1. In the present example, the partition wall portion 91, the first peripheral wall portion 92a, the third peripheral wall portion 94a, the third side wall portion 94b, and the accommodating wall portion 95a are integrally formed to constitute a first case portion 9A. A second case portion 9B including the first side wall portion 92b is joined to the first case portion 9A from the first side L1 in the axial direction.

The second peripheral wall portion 93a is formed so as to cover the outer side of the input member 2 and the counter gear mechanism 5 in the radial direction R. The second side wall portion 93b is formed so as to cover the second side L2 in the axial direction of the input member 2 and the counter gear mechanism 5. In the present embodiment, the second side wall portion 93b is integrally provided on a portion of the second peripheral wall portion 93a on the second side L2 in the axial direction with respect to the input member 2 and the counter gear mechanism 5. In the present example, the second peripheral wall portion 93a, the second side wall portion 93b, and the fourth side wall portion 94c are integrally formed to constitute a third case portion 9C. The third case portion 9C is joined to the first case portion 9A from the second side L2 in the axial direction. As a result, the opening on the first side L1 in the axial direction of the second peripheral wall portion 93a is closed by the first case portion 9A (partition wall portion 91).

The third peripheral wall portion 94a is formed so as to cover the outer side of the pair of output members 3 and the differential gear mechanism 4 in the radial direction R. The third side wall portion 94b is formed so as to cover the first side L1 in the axial direction of the differential gear mechanism 4. The fourth side wall portion 94c is formed so as to cover the second side L2 in the axial direction of the differential gear mechanism 4. In the present embodiment, both the third peripheral wall portion 94a and the third side wall portion 94b are formed integrally with the first case portion 9A. The opening on the second side L2 in the axial direction of the third peripheral wall portion 94a is closed by the fourth side wall portion 94c. As described above, the fourth side wall portion 94c is formed integrally with the second peripheral wall portion 93a and the second side wall portion 93b.

In the present embodiment, the first accommodation portion A1 is formed by the partition wall portion 91, the first peripheral wall portion 92a, and the first side wall portion 92b. That is, a space surrounded by the partition wall portion 91, the first peripheral wall portion 92a, and the first side wall portion 92b inside the case 9 is formed as the first accommodation portion A1.

In the present embodiment, the second accommodation portion A2 is formed by the partition wall portion 91, the second peripheral wall portion 93a, and the second side wall portion 93b. That is, a space surrounded by the partition wall portion 91, the second peripheral wall portion 93a, and the second side wall portion 93b inside the case 9 is formed as the second accommodation portion A2. In the present embodiment, the third accommodation portion A3 is formed by the third peripheral wall portion 94a, the third side wall portion 94b, and the fourth side wall portion 94c. That is, a space surrounded by the third peripheral wall portion 94a, the third side wall portion 94b, and the fourth side wall portion 94c inside the case 9 is formed as the third accommodation portion A3. In the present embodiment, the second accommodation portion A2 and the third accommodation portion A3 are formed to communicate with each other.

In the present embodiment, the fourth accommodation portion A4 is formed by the accommodating wall portion 95a and the lid portion 95b. That is, a space surrounded by the accommodating wall portion 95a and the lid portion 95b inside the case 9 is formed as the fourth accommodation portion A4.

The accommodating wall portion 95a is formed in a tubular shape surrounding the side of the inverter device 10. In the present embodiment, the accommodating wall portion 95a extends upward in state of being mounted on a vehicle from the first peripheral wall portion 92a and the second peripheral wall portion 93a so as to form an opening for putting the inverter device 10 in the fourth accommodation portion A4 and taking out the inverter device 10 from the fourth accommodation portion A4. Here, the "state of being mounted on a vehicle" refers to a state in which the vehicle drive device 100 is mounted on a vehicle. Note that as described above, the accommodating wall portion 95a is formed integrally with the partition wall portion 91, the first peripheral wall portion 92a, the third peripheral wall portion 94a, and the third side wall portion 94b.

The lid portion 95b is formed so as to close the opening in the accommodating wall portion 95a. In the present embodiment, the lid portion 95b is configured to be detachable from the accommodating wall portion 95a.

The rotating electric machine 1 functions as a drive source for wheels WH (see FIG. 2). The rotating electric machine 1 has a function as a motor (electric motor) that receives supply of electric power and generates power, and a function as a generator (dynamo) that receives supply of power and generates electric power. Specifically, the rotating electric machine 1 is electrically connected to an electricity storage device (not illustrated) such as a battery or a capacitor. The rotating electric machine 1 is powered by the electric power stored in the electricity storage device to generate driving force. In addition, the rotating electric machine 1 generates electricity by using driving force transmitted from the wheel WH side to charge the electricity storage device.

As illustrated in FIG. 1, the stator 11 of the rotating electric machine 1 includes a cylindrical stator core 111. The stator core 111 is fixed to a non-rotating member. In the present embodiment, the stator core 111 is fixed to the first peripheral wall portion 92a of the case 9 as the non-rotating member. The rotor 12 of the rotating electric machine 1 includes a cylindrical rotor core 121. The rotor core 121 is rotatably supported with respect to the stator core 111. In the present embodiment, the rotor 12 further includes a rotor shaft 122 connected to the rotor core 121 so as to rotate integrally therewith. The rotor shaft 122 is formed to extend along the first axis X1. The rotor core 121 is fixed (for example, press-fitted) to the rotor shaft 122, and end plates 125 are attached to both sides of the rotor core 121 in the axial direction L. In the present embodiment, the rotor shaft 122 is formed in a tubular shape with the first axis X1 as the axis.

In the present embodiment, the rotating electric machine 1 is an inner rotor type three-phase AC motor. That is, the stator 11 is disposed outside the rotor 12 in the radial direction R. Therefore, the stator core 111 is disposed outside the rotor core 121 in the radial direction R. The rotor shaft 122 is disposed inside the rotor core 121 in the radial direction R.

In the present embodiment, the rotating electric machine 1 is a rotating field type rotating electric machine. Therefore, a stator coil is wound around the stator core 111. In the present embodiment, the stator coil is wound around the stator core 111 such that a first coil end portion 112 protruding to the first side L1 in the axial direction with respect to the stator core 111 and a second coil end portion 113 protruding to the second side L2 in the axial direction with respect to the stator core 111 are formed. Although not illustrated, the rotor core 121 is provided with a permanent magnet. As described above, the rotating electric machine 1 includes the stator core 111, the rotor core 121 rotatably supported with respect to the stator core 111, and the tubular rotor shaft 122 connected to the rotor core 121 so as to rotate integrally therewith, and serves as a drive source of the wheels WH (see FIG. 2).

The input member 2 is drivingly connected to the rotor 12 of the rotating electric machine 1. In the present embodiment, the input member 2 includes an input gear 21 and an input shaft 22. The vehicle drive device 100 includes a drive transmission mechanism provided on a power transmission path connecting the rotor shaft 122 and the wheels WH and having the input shaft 22 spline-coupled to the rotor shaft 122. More specifically, an inner spline is formed in the inner peripheral surface of the rotor shaft 122, an outer spline is formed in the outer peripheral surface of the input shaft 22, and the rotor shaft 122 and the input shaft 22 are integrally rotatable by fitting the inner spline and the outer spline. Note that an outer spline may be formed in the outer peripheral surface of the rotor shaft 122, and an inner spline may be formed in the inner peripheral surface of the input shaft 22.

Here, in the present application, "driving connection" refers to a state in which two rotary elements are connected so as to be able to transmit driving force, and includes a state in which the two rotary elements are connected so as to rotate integrally, or a state in which the two rotary elements are connected so as to be able to transmit driving force through one or at least two transmission members. As such transmission members, various members that transmit rotation at the same speed or at a variable speed, such as a shaft, a gear mechanism, a belt, and a chain are included. Note that as the transmission member, an engagement device that selectively transmits rotation and driving force, for example, a friction engagement device, a meshing engagement device, or the like may be included.

The input gear 21 is connected to the input shaft 22 so as to rotate integrally therewith. In the example illustrated in FIG. 1, the input gear 21 is formed integrally with the input shaft 22.

The input shaft 22 is formed to extend along the first axis X1. In the present embodiment, the input shaft 22 penetrates the partition wall portion 91 of the case 9 in the axial direction L, and is connected to the rotor shaft 122 so as to rotate integrally therewith. In the example illustrated in FIG. 1, the end portion on the first side L1 in the axial direction of the input shaft 22 is disposed on the inner side in the radial direction R with respect to the end portion on the second side L2 in the axial direction of the rotor shaft 122. The portions are connected to each other so as to rotate integrally by spline engagement.

The counter gear mechanism 5 includes a counter input gear 51 that meshes with the input gear 21, a counter output gear 52 that rotates integrally with the counter input gear 51, and a counter shaft 53 that connects the gears 51 and 52.

The counter input gear 51 and the counter output gear 52 are connected so as to rotate integrally through the counter shaft 53. The counter shaft 53 is formed to extend along the third axis X3. In the example illustrated in FIG. 1, the counter input gear 51 is connected to the counter shaft 53 by spline engagement. The counter output gear 52 is formed integrally with the counter shaft 53. In the example illustrated in FIG. 1, the counter output gear 52 is formed to have a smaller diameter than that of the counter input gear 51. The counter output gear 52 is disposed on the first side L1 in the axial direction with respect to the counter input gear 51. Although not illustrated, an output gear of the input shaft 22 may be connected to the input shaft 22 by spline engagement, and the counter input gear may be formed integrally with the counter shaft 53.

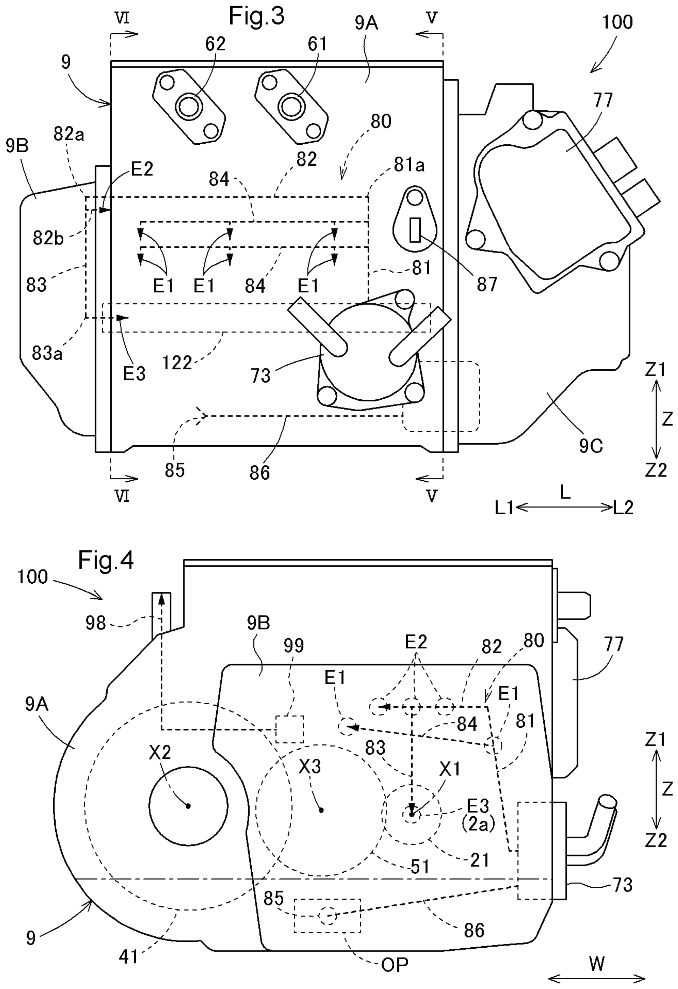

As illustrated in FIG. 1, the parking mechanism 7 includes a parking gear 75. The input shaft 22 is connected to the parking gear 75 so as to rotate integrally therewith. In the example illustrated in FIG. 1, the input shaft 22 and the parking gear 75 are connected to each other by spline engagement. The parking mechanism 7 includes an engaging member (not illustrated) that selectively engages with the parking gear 75, and a second power transmission mechanism (not illustrated) that transmits power to the engaging member. The parking mechanism 7 (second power transmission mechanism) is configured to be drivable by a parking actuator 77 provided in the third case portion 9C of the case 9 (see FIGS. 3 and 4).

Note that the present applicant discloses the parking mechanism in detail through JP 2023-48738 A. Therefore, the matters disclosed in the application can be applied to the embodiments of the present invention.

The differential gear mechanism 4 is configured to distribute the rotation transmitted from the input member 2 side to the pair of output members 3. In the present embodiment, the differential gear mechanism 4 includes a differential input gear 41, which is an input element of the differential gear mechanism 4. Therefore, the differential gear mechanism 4 distributes the rotation of the differential input gear 41 to the pair of output members 3.

In the present embodiment, the differential gear mechanism 4 further includes a differential case 42, a pair of pinion gears 43, and a pair of side gears 44. Here, the pair of pinion gears 43 and the pair of side gears 44 are both bevel gears.

The differential case 42 is a hollow member that accommodates the pair of pinion gears 43 and the pair of side gears 44. The differential case 42 is connected to the differential input gear 41 so as to rotate integrally therewith. In the example illustrated in FIG. 1, the differential input gear 41 is connected to the differential case 42 by bolt fastening.

The pair of pinion gears 43 is disposed so as to face each other with a space therebetween in the radial direction R with respect to the second axis X2. The pair of pinion gears 43 is attached to a pinion shaft 43a supported so as to rotate integrally with the differential case 42. Each of the pair of pinion gears 43 is configured to be rotatable (turnable) on the pinion shaft 43a and to be rotatable (revolvable) around the second axis X2.

The pair of side gears 44 meshes with the pair of pinion gears 43. The pair of side gears 44 is disposed so as to rotate about the second axis X2 as a rotation axis. The pair of side gears 44 is disposed so as to face each other across the pinion shaft 43a with a space between the side gears 44 in the axial direction L.

Each of the pair of output members 3 is drivingly connected to the wheel WH (see FIG. 2). In the present embodiment, each of the pair of output members 3 is connected to the side gear 44 so as to rotate integrally therewith. In the present embodiment, one of the pair of output members 3 penetrates the third side wall portion 94b in the axial direction L, and the other of the pair of output members 3 penetrates the fourth side wall portion 94c in the axial direction L. Each of the pair of output members 3 is connected to a drive shaft DS drivingly connected to the wheel WH so as to rotate integrally with the drive shaft DS. In the example illustrated in FIG. 1, each of the pair of output members 3 is formed in a tubular shape with the second axis X2 as the axis. In a state where the drive shaft DS is disposed on the inner side in the radial direction R with respect to each of the pair of output members 3, the drive shaft DS and the output member 3 are connected to each other by spline engagement.

The inverter device 10 is configured to control the rotating electric machine 1. In the present embodiment, the inverter device 10 is a device that is electrically connected to the rotating electric machine 1 and the above-described electricity storage device and converts electric power between direct current of the electricity storage device and alternating current of a plurality of phases (here, three phases) of the rotating electric machine 1. In the present example, the inverter device 10 includes a switching element unit having a plurality of switching elements constituting an inverter circuit, a smoothing capacitor that smooths a voltage on a DC power supply side of the inverter circuit, and a control board that controls the inverter circuit.

As illustrated in FIG. 3, the first case portion 9A of the case 9 is provided with an inflow port 61 and an outflow port 62 through which a cooling medium (liquid or gas) for cooling the inverter device 10 flows in and out.

In the following description, the vertical direction of the vehicle drive device 100 in the state of being mounted on a vehicle is referred to as a "vertical direction Z". The upper side and the lower side in the "vertical direction Z" are simply referred to as an "upper side Z1" and a "lower side Z2", respectively. In addition, a direction orthogonal to the first axis X1 as viewed in the vertical direction along the vertical direction Z is referred to as a "width direction W".

As illustrated in FIG. 4, a breather opening portion 98 that allows the inside and the outside of the second accommodation portion A2 to communicate with each other is disposed on the Z1 side in the vertical direction Z of the case 9. The second accommodation portion A2 is provided with a breather chamber 99 that opens to the second accommodation portion A2 and communicates with the breather opening portion 98. As described above, the vehicle drive device 100 is configured such that the inside and the outside of the second accommodation portion A2 can communicate with each other through the breather opening portion 98 and the breather chamber 99.

As illustrated in FIGS. 3 and 4, the vehicle drive device 100 has a lubricating oil supply passage 80. The lubricating oil supply passage 80 supplies lubricating oil to the motor, the lubricating oil having flowed in from a lubricating oil inlet 85 formed in motor-side space and having flowed through an inflow passage 86 and an oil cooler 73. Specifically, the lubricating oil supply passage 80 supplies the lubricating oil toward first outlets E1, second outlets E2, and a third outlet E3.

The first outlet E1 supplies the lubricating oil to the rotor core 121. The second outlet E2 supplies the lubricating oil to a coil end of the stator core 111. The third outlet E3 supplies the lubricating oil to a lubrication center oil passage 2a (see FIG. 4) formed coaxially with the first axis X1, which is a drive axis of the input member 2.

The lubricating oil supply passage 80 includes a first oil passage 81, a second oil passage 82, a third oil passage 83, and a fourth oil passage 84. The first oil passage 81 is formed from the oil cooler 73 toward the upper side Z1. The second oil passage 82 is formed along the axial direction L from a front end portion 81a of the first oil passage 81. The third oil passage 83 is formed from a front end portion 82a of the second oil passage 82 toward the lower side Z2. A branch oil passage 82b directed to the second outlets E2 is connected to the upper side Z1 of the third oil passage 83, and an oil passage directed to the third outlet E3 is connected to a front end portion 83a of the third oil passage 83. In the present embodiment, the plurality of (three) second outlets E2 are formed, and the lubricating oil is supplied toward a bus bar (not illustrated) electrically connected to the UVW phases of the rotating electric machine 1 constituted by the three-phase AC motor.

The fourth oil passage 84 branches from the middle of the first oil passage 81. The fourth oil passage 84 is formed to be inclined in the axial direction L and the width direction W. The fourth oil passage 84 is connected to the plurality of first outlets E1 at both the branch section and the front end section, and supplies the lubricating oil over the axial direction L and the circumferential direction of the rotor core 121.

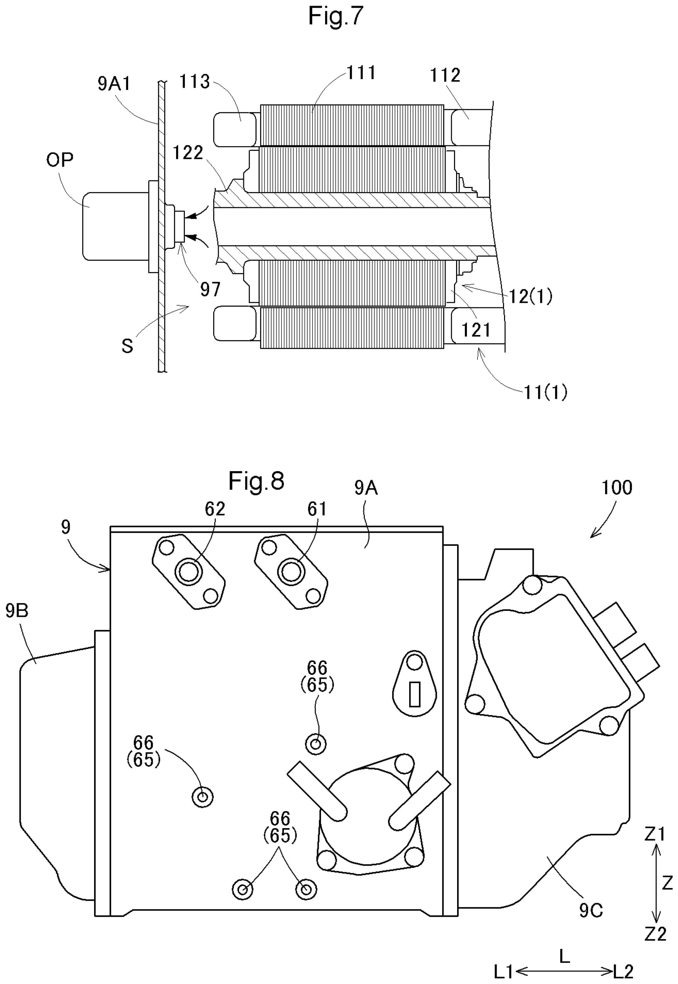

In the vehicle drive device 100, an electric oil pump OP (see FIGS. 4 and 7) is accommodated in the second accommodation portion A2 (see FIG. 1) of the first case portion 9A by being fastened with bolts, for example, and supplies the lubricating and cooling oil to the rotating electric machine 1 and the like as described above. The first case portion 9A is provided with a power supply connector 87 (see FIG. 3) that supplies electric power to the electric oil pump OP described above. The electric power supplied from the power supply connector 87 is supplied to the electric oil pump OP through a power supply cable (not illustrated) disposed inside the second accommodation portion A2.

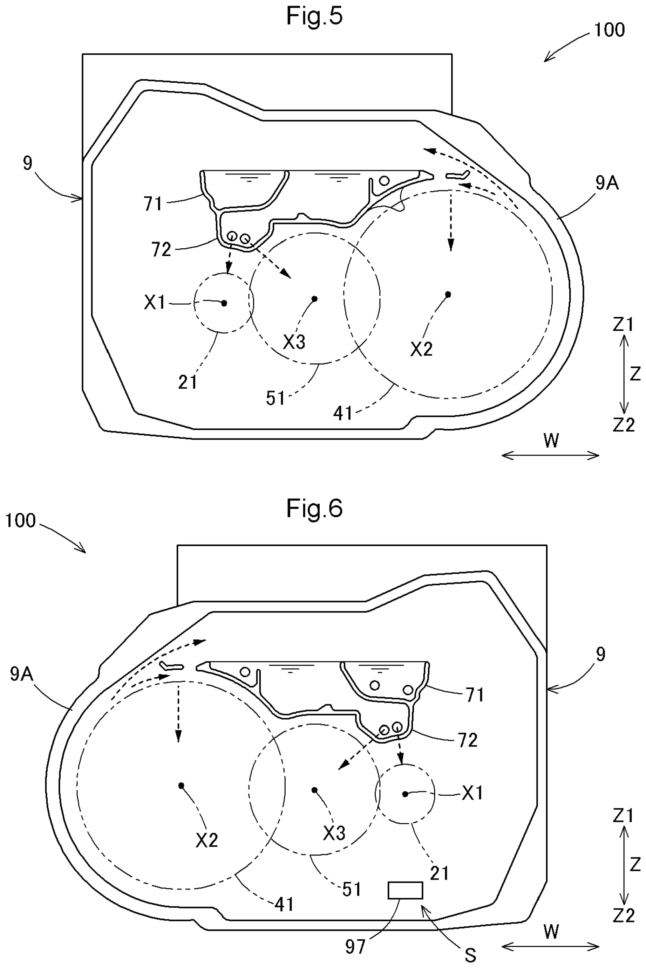

In addition to the oil supplied by the electric oil pump OP, oil scraped up by the gear accommodated inside the case 9 is also supplied as the lubricating and cooling oil. An oil storage portion in which oil having been used for lubrication and cooling falls and is stored is formed inside the case 9, particularly below a device accommodating chamber. The oil accumulated in the oil storage portion is scraped up by the gear (for example, the differential input gear 41) included in the vehicle drive device 100. The scraped oil is directly supplied to a lubrication target portion such as a bearing, and is stored in catch tanks 71 and 72 (see FIGS. 5 and 6) formed in the case 9. Then, the oil is supplied to the lubrication target portion via the catch tanks 71 and 72. As illustrated in FIGS. 5 and 6, in the present embodiment, the vehicle drive device 100 includes the upper catch tank 71 formed relatively on the upper side Z1 and the lower catch tank 72 formed relatively on the lower side Z2. The upper catch tank 71 and the lower catch tank 72 communicate with each other, and are configured such that the oil stored in the upper catch tank 71 can be supplied to the lower catch tank 72 through an orifice. The oil stored in the upper catch tank 71 and the lower catch tank 72 is supplied to each of the supply target parts through orifices.

Note that the present applicant discloses the arrangement of the electric oil pump OP in detail through JP 2023-48740 A. Therefore, the matters disclosed in the application can be applied to the embodiments of the present invention.

As illustrated in FIGS. 6 and 7, the case 9 has an oil reservoir S, and a strainer 97 communicating with the electric oil pump OP is provided on a surface portion 9A1 provided on the first case portion 9A and facing the oil reservoir S. As a result, the oil in the oil reservoir S can be sucked up by the electric oil pump OP through the strainer 97 and then supplied again to the rotating electric machine 1 and the like.

Note that the present applicant discloses the strainer 97 in detail through JP 2023-146588 A. Therefore, the matters disclosed in the application can be applied to the embodiments of the present invention.

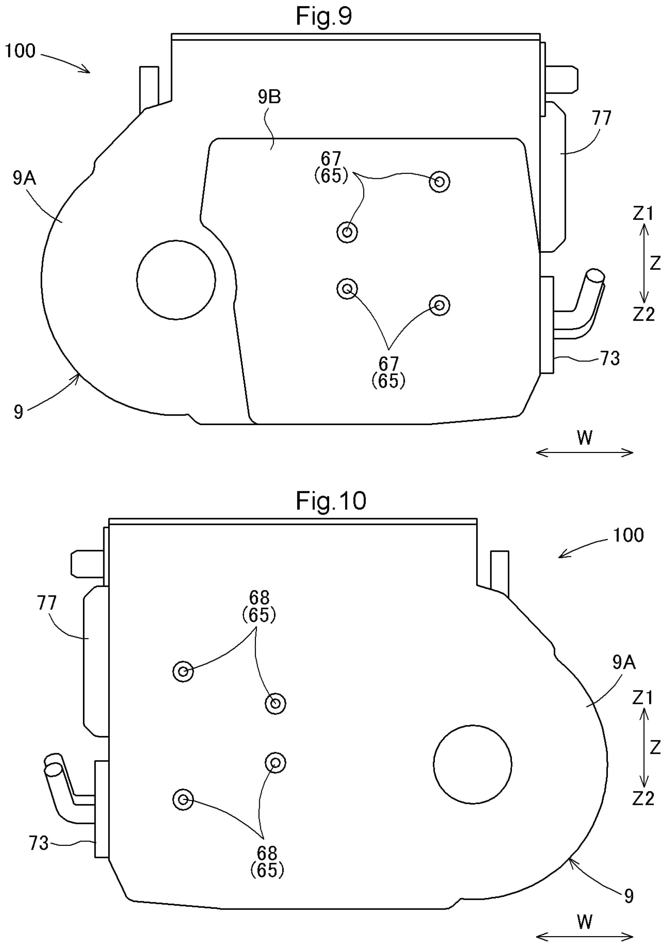

FIGS. 8 to 10 illustrate a configuration example of the above-described vehicle drive device 100. As illustrated in FIGS. 8 to 10, the vehicle drive device 100 is supported by a vehicle body (for example, a cross member) of a vehicle through mount portions 65. The mount portions 65 are provided on outer surfaces of the case 9. In the present embodiment, the mount portion 65 is disposed on each of the front surface (FIG. 8), one side surface (FIG. 9), and the other side surface (10) of the vehicle drive device. In the present embodiment, the mount portions 65 include a first mount portion 66, a second mount portion 67, and a third mount portion 68. Each of the mount portions 66, 67, and 68 includes a plurality of ("four" in the present embodiment) hole portions for fixing fixing members such as bolts. As illustrated in FIG. 8, the first mount portion 66 is provided on the front surface of the first case portion 9A. As illustrated in FIG. 9, the second mount portion 67 is provided on the second case portion 9B disposed on the first side L1 in the axial direction of the case 9. As illustrated in FIG. 10, the third mount portion 68 is provided on the second side L2 in the axial direction of the first case portion 9A.

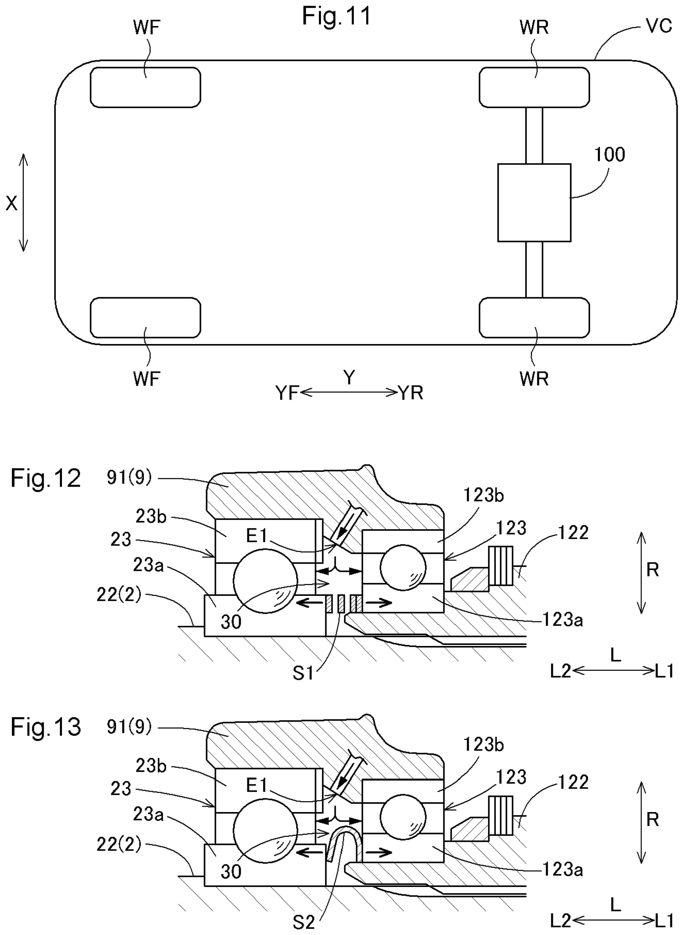

As illustrated in FIG. 11, the vehicle drive device 100 of the present embodiment is mounted on a vehicle VC for driving rear wheels, for example. A front wheel WF side with respect to rear wheels WR in the vehicle front-rear direction Y (see FIG. 11) is referred to as a front side YF in the front-rear direction, and the opposite side is referred to as a rear side YR in the front-rear direction. A direction orthogonal to the vehicle front-rear direction Y is defined as a vehicle width direction X. In the present embodiment, the vehicle width direction X and the axial direction L coincide with each other (See FIGS. 1 and 10). In a case where the vehicle drive device 100 is mounted on the vehicle VC for driving the rear wheels, the second axis X2, the third axis X3, and the first axis X1 are disposed in this order from the front side YF in the front-rear direction toward the rear side YR in the front-rear direction in the vehicle front-rear direction Y.

Although not illustrated, the vehicle drive device 100 of the present embodiment may be mounted on the vehicle VC for driving the front wheels WF, or the vehicle drive devices 100 may be mounted on the front and rear sides of the vehicle VC for driving the front wheels WF and for driving the rear wheels WR, respectively. In a case where the vehicle drive device 100 is mounted on the vehicle VC for driving the front wheels WF, the first axis X1, the third axis X3, and the second axis X2 are disposed in this order from the front side YF in the front-rear direction toward the rear side YR in the front-rear direction in the vehicle front-rear direction Y.

As illustrated in FIG. 1, the case 9 (an example of a housing) that accommodates the rotating electric machine 1 and the drive transmission mechanism (the rotor shaft 122, the input shaft 22, the output members 3, the differential gear mechanism 4, the counter gear mechanism 5, and the like) is provided. As illustrated in FIG. 12, the rotor shaft 122 and the input shaft 22 of the drive transmission mechanism are disposed adjacent to the partition wall portion 91 (an example of the housing) of the case 9. The rotor shaft 122 is supported by the partition wall portion 91 through a first ball bearing 123 having a first inner ring 123a and a first outer ring 123b. The rotor shaft 122 is supported by the case 9 through a third ball bearing 124 provided on the side opposite to a first ball bearing 123 side and having a third inner ring 124a and a third outer ring 124b (see FIG. 1). The input shaft 22 is supported by the partition wall portion 91 through a second ball bearing 23 having a second inner ring 23a and a second outer ring 23b. In the present embodiment, the second outer ring 23b is attached to the partition wall portion 91, and the rotor shaft 122 is spline-coupled to the input shaft 22 in a state where the first outer ring 123b is press-fitted to the rotor shaft 122 and the second inner ring 23a is press-fitted to the input shaft 22. Therefore, the inner peripheral surface of the first inner ring 123a has a gap between itself and the outer peripheral surface of the rotor shaft 122. As a result, since the first inner ring 123a of the first ball bearing 123 relatively moves toward the rotor shaft 122 with respect to the first outer ring 123b by the biasing force of an elastic member S1, rattling of the first ball bearing 123 on the rotor shaft 122 can be suppressed. Furthermore, since the third inner ring 124a of the third ball bearing 124 supporting the rotor 12 through the rotor shaft 122 moves rightward in FIG. 1 by the movement of the first inner ring 123a, rattling of the third ball bearing 124 on the rotor shaft 122 can also be suppressed.

The first inner ring 123a of the first ball bearing 123 is provided to be movable by a predetermined amount in the axial direction L of the rotor shaft 122. The elastic member S1 is disposed between the first ball bearing 123 and the second ball bearing 23 adjacent to each other in the axial direction L of the rotor shaft 122 and the input shaft 22. The elastic member S1 biases the first ball bearing 123 and the second ball bearing 23 in a direction of separating the first ball bearing 123 and the second ball bearing 23 from each other. The elastic member S1 is made of, for example, a spring, rubber, or the like. In the present embodiment, the elastic member S1 is formed in a tubular shape as a whole, and is disposed between the first inner ring 123a of the first ball bearing 123 and the second inner ring 23a of the second ball bearing 23.

The lubricating oil is supplied from the first outlet E1 to a space 30 surrounded by the partition wall portion 91, the elastic member S1, the first ball bearing 123, and the second ball bearing 23 (see FIG. 7). The space 30 is configured as a lubricating oil reservoir space. Specifically, discharge of the lubricating oil from the first outlet E1 is suppressed by the elastic member S1 disposed on the inner side in the radial direction R with respect to the space 30, and therefore the space 30 functions as the lubricating oil reservoir space. As a result, an appropriate amount of the lubricating oil can be supplied to the first ball bearing 123 and the second ball bearing 23 via the reservoir space 30, so that lubricity of the first ball bearing 123 and the second ball bearing 23 is improved.

### [Second Embodiment]

In a second embodiment, as illustrated in FIG. 13, an elastic member S2 is disposed between a first ball bearing 123 and a second ball bearing 23 adjacent to each other in an axial direction L of a rotor shaft 122 and an input shaft 22. The elastic member S2 biases the first ball bearing 123 and the second ball bearing 23 in a direction of separating the first ball bearing 123 and the second ball bearing 23 from each other. In the second embodiment, the elastic member S2 is formed by a leaf spring that protrudes outward in a radial direction R, and is disposed between a first inner ring 123a of the first ball bearing 123 and a second inner ring 23a of the second ball bearing 23. Furthermore, the elastic member S2 protrudes outward in the radial direction R with respect to the outer diameter of the first inner ring 123a. The elastic member S2 may protrude outward in the radial direction R with respect to the outer diameter of the second inner ring 23a, and may protrude outward in the radial direction R with respect to one or both of the outer diameter of the first inner ring 123a and the outer diameter of the second inner ring 23a. Other configurations are the same as those of the first embodiment.

### [Third Embodiment]

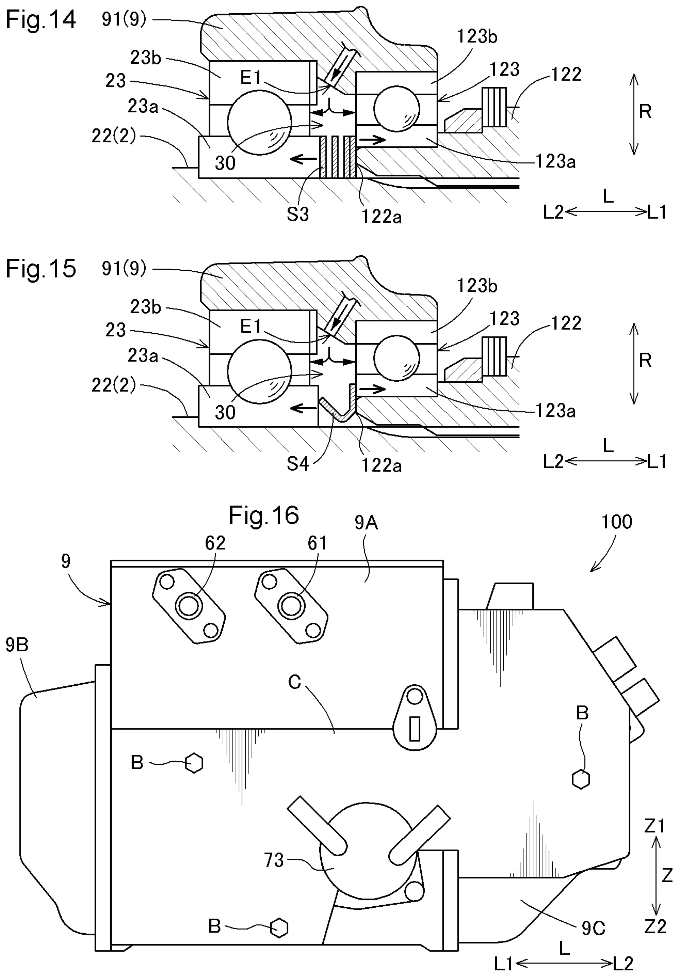

In a third embodiment, as illustrated in FIG. 14, an elastic member S3 is disposed between a first ball bearing 123 and a second ball bearing 23 adjacent to each other in an axial direction L of a rotor shaft 122 and an input shaft 22. The elastic member S3 biases the first ball bearing 123 and the second ball bearing 23 in a direction of separating the first ball bearing 123 and the second ball bearing 23 from each other. In the third embodiment, the elastic member S3 is formed in a tubular shape as a whole like the elastic member S1 of the first embodiment. However, the elastic member S3 is disposed between a second inner ring 23a of the second ball bearing 23 and each of a first inner ring 123a of the first ball bearing 123 and an end portion 122a of the rotor shaft 122, which is different from the first embodiment in this respect. Other configurations are the same as those of the first embodiment.

### [Fourth Embodiment]

In the third embodiment, as illustrated in FIG. 15, an elastic member S4 is disposed between a first ball bearing 123 and a second ball bearing 23 adjacent to each other in an axial direction L of a rotor shaft 122 and an input shaft 22. The elastic member S4 biases the first ball bearing 123 and the second ball bearing 23 in a direction of separating the first ball bearing 123 and the second ball bearing 23 from each other. In the fourth embodiment, the elastic member S4 is formed by a leaf spring similarly to the elastic member S2 of the second embodiment. However, the elastic member S4 is a leaf spring that protrudes inward in a radial direction R, and is disposed between a second inner ring 23a of the second ball bearing 23 and each of a first inner ring 123a of the first ball bearing 123 and an end portion 122a of the rotor shaft 122, which is different from the second embodiment in this respect. Other configurations are the same as those of the first embodiment.

### [Other Embodiments]

(a) The example in which the elastic member S2 of the second embodiment protrudes outward in the radial direction R with respect to one or both of the outer diameter of the first inner ring 123a and the outer diameter of the second inner ring 23a has been described. Although not illustrated, the elastic member S1 of the first embodiment, the elastic member S3 of the third embodiment, and the elastic member S4 of the fourth embodiment may also protrude outward in the radial direction R with respect to one or both of the outer diameter of the first inner ring 123a and the outer diameter of the second inner ring 23a.
(b) In the above embodiments, a tubular elastic member and a leaf spring are mentioned as examples of the elastic members S1 to S4, but the elastic members S1 to S4 may have other shapes or configurations as long as the elastic members S1 to S4 bias the first ball bearing 123 and the second ball bearing 23 in the direction of separating the first ball bearing 123 and the second ball bearing 23 from each other.
(c) As illustrated in FIG. 16, a sound shielding cover C may be attached to the front side of the vehicle drive device 100. The sound shielding cover C is fixed by, for example, a plurality of (three in FIG. 16) bolts B. Although not illustrated, the sound shielding cover C may be attached to all the surfaces of the vehicle drive device 100.

In the above-described embodiments, the following configuration is conceived.
(1) A vehicle drive device (100) includes: a rotating electric machine (1) that has a stator (11), a rotor (12) that is rotatably supported with respect to the stator (11), and a tubular rotor shaft (122) that is connected to the rotor (12) so as to rotate integrally with the rotor (12), the rotating electric machine (1) serving as a drive source of a wheel (WH); a drive transmission mechanism that is provided on a power transmission path connecting the tubular rotor shaft (122) and the wheel (WH), and has an input shaft (22) that is coupled to the tubular rotor shaft (122); and a housing (9) that accommodates the rotating electric machine (1) and the drive transmission mechanism, in which the tubular rotor shaft (122) is supported by the housing (9) with a first ball bearing (123) that has a first inner ring (123a) and a first outer ring (123b) interposed between the tubular rotor shaft (122) and the housing (9), the input shaft (22) is supported by the housing (9) with a second ball bearing (23) that has a second inner ring (23a) and a second outer ring (23b) interposed between the input shaft (22) and the housing (9), and an elastic member (S1, S2, S3, S4) is disposed between the first ball bearing (123) and the second ball bearing (23) that are adjacent to each other in an axial direction of the tubular rotor shaft (122) and the input shaft (22), the elastic member (S1, S2, S3, S4) biasing the first ball bearing (123) and the second ball bearing (23) in a direction of separating the first ball bearing (123) and the second ball bearing (23) from each other.

According to the present configuration, between the first ball bearing (123) of the rotor shaft (122) and the second ball bearing (23) of the input shaft (22), the elastic member (S1, S2, S3, S4) that biases the first ball bearing (123) and the second ball bearing (23) in the direction of separating the first ball bearing (123) and the second ball bearing (23) from each other is disposed. For example, in a case where the first inner ring (123a) of the first ball bearing (123) is movably provided on the rotor shaft (122), the first inner ring (123a) and the first outer ring (123b) abut on balls by the biasing force of the elastic member (S1, S2, S3, S4). As a result, smooth rotation of the rotating electric machine (1) is realized while reducing the amount of rattling in the radial direction at the normal time, and when excessive force acts, the first inner ring (123a) and the first outer ring (123b) are separated from the balls by the force against the biasing force of the elastic member (S1, S2, S3, S4), and seizure of the first ball bearing (123) can be prevented. In addition, since the first ball bearing (123) moves toward the rotor shaft (122) by the biasing force of the elastic member (S1, S2, S3, S4), rattling of the first ball bearing (123) on the rotor shaft (122) can also be suppressed. In addition, since the elastic member (S1, S2, S3, S4) is provided between the first ball bearing (123) and the second ball bearing (23) adjacent to each other in the axial direction of the rotor shaft (122) and the input shaft (22), that is, for example, close to the spline coupling of both the shafts, a machining error of the spline coupling can be absorbed.

Therefore, the vehicle drive device (100) can satisfactorily suppress rotational noise of the rotating electric machine (1).

(2) In the vehicle drive device (100) of (1), the elastic member (S1, S2, S3, S4) preferably biases the first inner ring (123a) in a direction in which the first inner ring (123a) and the first outer ring (123b) are relatively moved.

According to the present configuration, the first inner ring (123a) and the first outer ring (123b) are relatively moved by the elastic member (S1, S2, S3, S4). That is, it is possible to smoothly switch between a state in which the first inner ring (123a) and the first outer ring (123b) abut on the balls by the biasing force of the elastic member (S1, S2, S3, S4) and a state in which the first inner ring (123a) and the first outer ring (123b) are separated from the balls by the force against the biasing force of the elastic member (S1, S2, S3, S4).

(3) In the vehicle drive device (100) of (1) or (2), a space surrounded by the housing (9), the elastic member (S1, S2, S3, S4), the first ball bearing (123), and the second ball bearing (23) is preferably configured as a lubricating oil reservoir space (30).

According to the present configuration, since the space surrounded by the housing (9), the elastic member (S1, S2, S3, S4), the first ball bearing (123), and the second ball bearing (23) serves as the lubricating oil reservoir space (30), the lubricating oil supplied to the reservoir space (30) is less likely to be discharged to the outside. As a result, an appropriate amount of the lubricating oil can be supplied to the first ball bearing (123) and the second ball bearing (23) via the reservoir space (30), so that lubricity of the first ball bearing (123) and the second ball bearing (23) is improved.

(4) In the vehicle drive device (100) of (3), the elastic member (S1, S2, S3, S4) preferably protrudes outward in a radial direction (R) with respect to an outer diameter of the first inner ring (123a) or the second inner ring (23a).

According to the present configuration, the elastic member (S1, S2, S3, S4) can be appropriately brought into contact with a predetermined place including an upper end portion of the first inner ring (123a) or the second inner ring (23a). As a result, the elastic member (S1, S2, S3, S4) appropriately abuts against the first inner ring (123a) or the second inner ring (23a), so that the biasing force of the elastic member (S1, S2, S3, S4) can be more reliably caused to function by the first inner ring (123a) or the second inner ring (23a).

### INDUSTRIAL APPLICABILITY

The present invention is applicable to a vehicle drive device.

### REFERENCE SIGNS LIST

1: Rotating electric machine, 9: Case (Housing), 11: Stator, 12: Rotor, 22: Input shaft, 23: Second ball bearing, 23a: Second inner ring, 23b: Second outer ring, 30: Reservoir space, 91: Partition wall portion (Housing), 122: Rotor shaft, 123: First ball bearing, 123a: First inner ring, 123b: First outer ring, R: Radial direction, S1, S2, S3, S4: Elastic member, and WH: Wheel

## Claims

1. A vehicle drive device comprising:
a rotating electric machine that has a stator, a rotor that is rotatably supported with respect to the stator, and a tubular rotor shaft that is connected to the rotor core so as to rotate integrally with the rotor core, the rotating electric machine serving as a drive source of a wheel;
a drive transmission mechanism that is provided on a power transmission path connecting the tubular rotor shaft and the wheel, and has an input shaft that is coupled to the tubular rotor shaft; and
a housing that accommodates the rotating electric machine and the drive transmission mechanism,
wherein
the tubular rotor shaft is supported by the housing with a first ball bearing that has a first inner ring and a first outer ring interposed between the tubular rotor shaft and the housing,
the input shaft is supported by the housing with a second ball bearing that has a second inner ring and a second outer ring interposed between the input shaft and the housing, and
an elastic member is disposed between the first ball bearing and the second ball bearing that are adjacent to each other in an axial direction of the tubular rotor shaft and the input shaft, the elastic member biasing the first ball bearing and the second ball bearing in a direction of separating the first ball bearing and the second ball bearing from each other.

2. The vehicle drive device according to claim 1, wherein the elastic member biases the first inner ring in a direction in which the first inner ring and the first outer ring are relatively moved.

3. The vehicle drive device according to claim 1 or 2, wherein a space surrounded by the housing, the elastic member, the first ball bearing, and the second ball bearing is configured as a lubricating oil reservoir space.

4. The vehicle drive device according to claim 3, wherein the elastic member protrudes outward in a radial direction with respect to an outer diameter of the first inner ring or the second inner ring.
